# EUROPÄISCHE PATENTANMELDUNG

(11) **EP 4 495 864 A1**
(43) Veröffentlichungstag der Anmeldung: **22.01.2025**
(21) Anmeldenummer: 23186374.7
(22) Anmeldetag: 19.07.2023
(51) Int. Cl.: G06Q 30/0242

(54) **BEWERTUNG DER WIRKSAMKEIT EINES WERBESPOTS**

(71) Anmelder: Hurra Communications GmbH, 70173 Stuttgart (DE)
(72) Erfinder: Mikulski, Piotr, 30-103 Kraków (PL)
(74) Vertreter: Wörz, Volker Alfred

(57) **Zusammenfassung**

Die Erfindung betrifft ein Verfahren und ein Client-Server System zur Bewertung der Wirksamkeit eines über ein Kommunikationsnetzwerk übertragbaren Werbespots, wobei dem Werbespot mindestens eine Bezugsinformation zugeordnet ist. Um ein Ermitteln der Wirksamkeit des Werbespots unabhängig davon zu ermöglichen, ob Tracking-Daten zur Verfügung stehen, werden die folgenden Verfahrensschritte vorgeschlagen:
- Ermitteln (103) mindestens eines ersten Wertes, der ein Nutzerinteresse vor dem Übertragen des Werbespots (5) realisiert, wobei der erste Wert in Relation zu einer relativen oder absoluten Häufigkeit steht, mit der Suchanfragen bezüglich der mindestens einen Bezugsinformation vor dem Übertragen des Werbespots (5) angefordert wurden;
- Ermitteln (104) mindestens eines zweiten Wertes, der ein Nutzerinteresse nach dem Übertragen des Werbespots (5) realisiert, wobei der zweite Wert in Relation zu einer relativen oder absoluten Häufigkeit steht, mit der Suchanfragen bezüglich der mindestens einen Bezugsinformation nach dem Übertragen des Werbespots (5) angefordert werden;
- Ermitteln (105) einer Veränderung des Nutzerinteresses durch Vergleich des mindestens ersten Wertes und des mindestens zweiten Wertes;
- Bestimmen (105) eines Wertes für die Wirksamkeit des Werbespots (5) in Abhängigkeit von der Veränderung des Nutzerinteresses.

## Beschreibung

Die Erfindung betrifft ein Verfahren und ein Client-Server System zur Bewertung der Wirksamkeit eines über ein Kommunikationsnetzwerk übertragbaren Werbespots, wobei dem Werbespot mindestens eine Bezugsinformation zugeordnet ist.

Ein Client-Server System umfasst Clients und Server, die in Software und Hardware ausgebildet sein können und Informationen über ein Kommunikationsnetzwerk oder mehrere Kommunikationsnetzwerke austauschen. Ein Server ist beispielsweise so ausgebildet, dass er bestimmte Informationen oder Ressourcen, sogenannte Dienste, bereitstellt. Diese Dienste werden typischerweise durch einen Client oder mehrere Clients in Anspruch genommen, indem Anfragen über das Kommunikationsnetzwerk an den Server gesendet werden. Der Server wertet die eingehende Anfrage aus, überprüft gegebenenfalls eine Berechtigung des Clients zum Stellen der Anfrage und übermittelt der Anfrage entsprechende Informationen beziehungsweise stellt angeforderte Ressourcen zur Verfügung. Der Server kann so ausgebildet sein, dass er seinerseits Anfragen an andere Server stellen kann, beispielsweise um Informationen zu erhalten, die er dann gegebenenfalls aufbereitet und den anfragenden Clients zur Verfügung stellt. In dieser Funktion agiert der Server folglich auch als Client. Ebenso kann ein Client anderen Clients Informationen zur Verfügung stellen und agiert somit als Server.

Werbespots können in unterschiedlichen Datenformaten über das Internet und/oder broadcastfähige Kommunikationsnetzwerke übermittelt und von geeigneten Empfangsgeräten, wie beispielsweise Computer, Smartphones, Smart-TV und/oder HbbTV-fähigen Endgeräten empfangen werden. Werbespots beziehen sich regelmäßig auf mindestens ein Produkt, mindestens eine Dienstleistung, und/oder mindestens ein Unternehmen. Die Informationen, worauf sich ein Werbespot bezieht, werden im Folgenden als dem Werbespot zugeordnete Bezugsinformationen bezeichnet.

Werbespots können hinsichtlich einer Mehrzahl von Kriterien optimiert werden, beispielsweise hinsichtlich der Sendezeit, der anvisierten Zielgruppe, des Inhalts oder deren Länge. Fernen kann eine Optimierung dadurch erfolgen, dass der Werbespot eine bestimmte Position innerhalb einer Werbeunterbrechung in einem TV-Programm erhält. Auch durch die Auswahl des TV-Programms selbst, innerhalb dessen der Werbespot gezeigt wird oder einer anderen, einem Nutzer dargestellten Information, währenddessen ein Werbespot übertragen wird, kann eine Optimierung des Werbespots erreicht werden. Eine Optimierung des Werbespots kann folglich grundsätzlich dessen Darstellung (Zeit, Dauer, Kontext, etc.) und dessen Inhalt betreffen.

Für die Entscheidung, ob und gegebenenfalls wie eine Optimierung eines Werbespots erfolgen kann, können unterschiedliche Kriterien einzeln oder in einer beliebigen Kombination herangezogen werden. Diese Kriterien umfassen beispielsweise die Kosten für die Produktion und Darstellung sowie die Konversionsrate, welche angibt, wie hoch das Verhältnis zwischen den mit einem Werbespot erreichten Nutzern und einer hieraus resultierenden Reaktion der Nutzer ist. Wird beispielsweise in einem Werbespot eine Werbung gezeigt, in welcher ein Produkt in einem Onlineshop beworben wird, so kann das Verhältnis aus der Zahl der Nutzer, denen die Werbung auf ihrem Empfangsgerät gezeigt wird, und den hieraus resultierenden Verkäufen ermittelt und für die Entscheidung herangezogen werden, ob eine Optimierung dieser Werbung erfolgen soll. Die Konversionsrate ist somit eine Möglichkeit, die Wirksamkeit eines Werbespots zu messen.

Werbespots betreffen jedoch oftmals mehrere Produkte oder Dienstleistungen, beziehen sich auf eine gesamte Produktlinie oder betreffen ein Unternehmen als solches, wodurch sämtliche Produkte und Dienstleistungen zumindest indirekt eingeschlossen sind und eine Aussage über die Wirksamkeit des Werbespots über eine einzelnen Produkten zugeordnete Konversionsrate meist nicht mit ausreichender Genauigkeit getroffen werden kann. Ferner werden viele Produkte oder Dienstleistungen über eine Vielzahl von Online-Shops oder Offline-Shops vertrieben, so dass es kaum möglich ist, die einzelnen Verkäufe den Auswirkungen eines bestimmten Werbespots zuzuordnen.

Es sind Verfahren bekannt, um das Verhalten von Nutzern nach dem Darstellen eines Werbespots zu erfassen ("Tracking"), jedoch benötigt dies ein Überwachen der Endgeräte des Nutzers, was aus datenschutzrechtlichen Gründen häufig nicht zulässig, nicht wünschenswert oder nicht möglich ist, beispielsweise weil Tracking-Daten nicht existieren, der Zugang zu möglicherweise existierenden Tracking-Daten zu kostenintensiv ist und/oder der Nutzer Vorkehrungen getroffen hat, um ein Tracking zu verhindern.

Aufgabe der Erfindung ist es, ein Verfahren und ein Client-Server System zur schaffen, die das Ermitteln der Wirksamkeit eines Werbespots unabhängig davon ermöglichen, ob Tracking-Daten zur Verfügung stehen.

Die Aufgabe wird durch ein Verfahren der eingangs genannten Art dadurch gelöst, dass das Verfahren die folgenden Schritte umfasst:
- Ermitteln mindestens eines ersten Wertes, der ein Nutzerinteresse vor dem Übertragen des Werbespots realisiert, wobei der erste Wert in Relation zu einer relativen oder absoluten Häufigkeit steht, mit der Suchanfragen bezüglich der Bezugsinformation vor dem Übertragen des Werbespots angefordert wurden;
- Ermitteln mindestens eines zweiten Wertes, der ein Nutzerinteresse nach dem Übertragen des Werbespots realisiert, wobei der zweite Wert in Relation zu einer relativen oder absoluten Häufigkeit steht, mit der Suchanfragen bezüglich der Bezugsinformation nach dem Übertragen des Werbespots angefordert werden;
- Ermitteln einer Veränderung des Nutzerinteresses durch Vergleich des mindestens ersten Wertes und des mindestens zweiten Wertes;
- Bestimmen eines Wertes für die Wirksamkeit des Werbespots in Abhängigkeit von der Veränderung des Nutzerinteresses.

Erfindungsgemäß wird das Nutzerinteresse durch das Auswerten von Suchanfragen ermittelt, wobei insbesondere die Veränderung der Häufigkeit dieser Suchanfragen vor der Übertragung des Werbespots und nach dessen Übertragung verglichen wird. Die Suchanfragen, die hierbei berücksichtigt werden, betreffen eine oder mehrere der Bezugsinformationen, die dem Werbespot zugeordnet sind, also beispielsweise ein beworbenes Produkt, eine beworbene Dienstleistung, ein Unternehmen und/oder eine Marke, unter welcher ein Unternehmen Waren oder Dienstleitungen anbietet.

Das Kommunikationsnetzwerk, über das der Werbespot übertragen wird, ist bevorzugt ein zur Übertragung von TV-Sendungen geeignetes Kommunikationsnetzwerk. Hierfür können die bekannten Techniken wie Kabel-, Satelliten- und Funkübertragungen genutzt werden. Der Werbesport ist also bevorzugt ein TV-Werbespot. Die Suchanfragen bezüglich der Bezugsinformation vor bzw. nach dem Übertragen des Werbespots erfolgen bevorzugt über ein anderes Kommunikationsnetzwerk, besonders bevorzugt über das Internet.

Vorzugsweise werden die Daten bezüglich der auszuwertenden Suchanfragen von einer Internet-Suchmaschine, einem Internet Service Provider oder durch die InternetBrowser, die von deren Nutzern zur Kommunikation mit der Suchmaschine eingesetzt werden, mittels einer zusätzlichen Software ("plug-in") zur Verfügung gestellt. Gemäß dieser möglichen Ausführungsform wird folglich der mindestens eine erste Wert, der ein Nutzerinteresse vor dem Übertragen des Werbespots realisiert, und der mindestens eine zweite Wert, der ein Nutzerinteresse nach dem Übertragen des Werbespots realisiert,
- direkt aus den Suchanfragen an mindestens eine Suchmaschine,
- aus den Daten mindestens eines Internet Service Providers durch Auswerten der von dessen Nutzern eingegebenen Suchanfragen an eine oder mehrere SuchMaschinen in den entsprechenden Zeiträumen (d.h. vor bzw. nach dem Übertragen des Werbespots) und/oder
- durch Erfassen und Auswerten der mittels der Internetbrowser von Nutzern abgesandten Suchanfragen in den entsprechenden Zeiträumen erzeugt.

Sowohl Betreiber von Suchmaschinen als auch Internet Service Provider können derartige Daten über ein Portal zum Abruf bereitstellen, wobei diese Daten vorzugsweise anonymisiert sind.

Sind einem Werbespot mehrere Bezugsinformationen zugeordnet, so wird gemäß einer möglichen Ausführungsform der Erfindung für mindestens zwei Bezugsinformationen eine hiervon abhängige jeweilige Teil-Wirksamkeit des Werbespots ermittelt und auf eine Gesamtwirksamkeit dadurch geschlossen, dass die höchste der mindestens zwei Teil-Wirksamkeiten gewählt wird, ein Mittelwert aus den Teil-Wirksamkeiten gebildet wird und/oder jede der Teil-Wirksamkeiten hinsichtlich einer Relevanz ihrer zugrundeliegenden Bezugsinformationen für den Werbespot gewichtet und aus den gewichteten Teil-Wirksamkeiten ein Mittelwert bestimmt wird.

Sind einem Werbespot eine Mehrzahl von Bezugsinformationen zugeordnet, also beispielsweise die Bezeichnung eines Produktes, die Bezeichnung einer Produktlinie und die Bezeichnung des Unternehmens, das das Produkt herstellt und/oder vertreibt, so kann die Genauigkeit der ermittelten Wirksamkeit des Werbespots dadurch erhöht werden, dass bei deren Ermittlung die Suchanfragen für mehrere dieser Bezugsinformationen berücksichtigt werden und für jede der berücksichtigten Bezugsinformationen eine Teilwirksamkeit gemäß dem erfindungsgemäßen Verfahren ermittelt wird. Aus den so ermittelten Teilwirksamkeiten wird dann eine Gesamtwirksamkeit berechnet. Es kann vorteilhaft sein, wenn die Teilwirksamkeiten zuvor gewichtet werden. Beispielsweise kann die Teilwirksamkeit, die sich auf ein Produkt bezieht mit einem Faktor von 1, die Teilwirksamkeit, die aus den Suchanfragen bezüglich einer Produktlinie ermittelt wurde mit einem Faktor von 0,5 und die ermittelte Teilwirksamkeit für den Suchbegriff hinsichtlich der Firma eines Unternehmens mit 0,3 gewichtet werden, um die Gesamtwirksamkeit für den Werbespot hieraus zu berechnen.

Gemäß einer besonders vorteilhaften Ausführungsform wird ein zeitlicher Verlauf der Suchanfragen bezüglich mindestens einer Bezugsinformation erfasst und in Abhängigkeit von einer Veränderung des zeitlichen Verlaufs vor und nach dem Übertragen des Werbespots dessen Wirksamkeit ermittelt. Zeitliche Suchverläufe können von Suchmaschinen kontinuierlich ermittelt und/oder in Abhängigkeit von einer konkreten Anforderung des zeitlichen Verlaufs der Veränderungen der Suchanfragen zu einer bestimmten Bezugsinformation von der Suchmaschine aus den zur Verfügung stehenden Informationen gebildet werden.

Zeitliche Verläufe können beispielsweise von den Betreibern der Suchmaschine "Google" durch Nutzung des als "Google Trends" bezeichneten Dienstes angefordert werden. Dadurch, dass Google Trends auf die Suchanfragen der derzeit weltweit beliebtesten Suchmaschine zugreift, kann davon ausgegangen werden, dass ein Großteil der Empfänger des Werbespots eine eventuelle Suchanfrage hinsichtlich einer oder mehrerer Bezugsinformationen nach dem Betrachten des Werbespots an genau diese Suchmaschine richten wird. Somit sind diese Daten besonders gut geeignet, für eine Bestimmung der Wirksamkeit des Werbespots herangezogen zu werden, da sie repräsentativ für einen Großteil der Empfänger des Werbespots bzw. einen Großteil der Suchanfragen sind.

Es ist möglich, dass der zeitliche Verlauf des Nutzerinteresses und/oder der mindestens erste Wert, der ein Nutzerinteresse vor dem Übertragen des Werbespots darstellt und der mindestens zweite Wert, der ein Nutzerinteresse nach dem Übertragen des Werbespots darstellt, in Form von relativen Werten zur Verfügung gestellt werden, so dass eine absolute Wirksamkeit des betrachteten Werbespots hieraus nicht direkt ermittelbar ist. Ein Beispiel hierfür sind die zeitlichen Verläufe von Suchbegriffen, die von Google Trends angefordert werden können.

Es kann jedoch wünschenswert sein, eine durch einen Werbespot generierte Gewinnsteigerung in absoluten Zahlen zu erhalten, beispielsweise um zu sehen, ob die absoluten Kosten für einen Werbespot in einem wirtschaftlich vertretbaren Verhältnis zu der generierten Gewinnsteigerung stehen.

Eine absolute Wirksamkeit des Werbespots kann gemäß einer weiteren möglichen Ausführungsform der Erfindung dadurch bestimmt werden, dass die relative Wirksamkeit des Werbespots und/oder die ein Nutzerinteresse realisierenden, relativen Werte mit den entsprechenden Werten eines anderen Werbespots verglichen werden, wobei für den anderen Werbespot absolute Werte für die Wirksamkeit und/oder für die ein Nutzerinteresse realisierenden Werte bekannt sind. Hierbei wird vorzugsweise ein anderer Werbespot gewählt, mit dem ein vergleichbares Produkt oder eine vergleichbare Dienstleistung beworben wurde und aus dessen Gewinnzahlen dann auf eine mit dem aktuell betrachteten Werbespot zu erwartende absolute Wirksamkeit geschlossen werden kann. Vergleichbare Werbespots, für die eine absolute Wirksamkeit vorliegt, können von demselben Unternehmen oder von anderen Unternehmen stammen.

Insbesondere kann dadurch von relativen ersten und zweiten Werten auf entsprechende absolute Werte geschlossen werden, die ein Nutzerinteresse vor bzw. nach dem Übertragen des Werbespots repräsentieren. Die ersten und zweiten Werte entsprechen bevorzugt Suchanfragen bezüglich der mindestens einen Bezugsinformation an eine Suchmaschine in dem entsprechenden Zeitraum.

Vorzugsweise wird bei Vorliegen von relativen Werten, die ein Nutzerinteresse vor und nach dem Übertragen des Werbespots repräsentieren, eine absolute Wirksamkeit unter Verwendung von Künstlicher Intelligenz ermittelt, wobei insbesondere Techniken aus dem Bereich Maschinelles Lernen angewendet werden. Hierbei werden die relativen Werte des aktuell betrachteten Werbespots einem KI-System zugeführt, ebenso wie Daten von mindestens einem Werbespot, der in der Vergangenheit übertragen oder ausgestrahlt worden ist und worin ein anderes Unternehmen und/oder mindestens ein anderes Produkt beworben wurde. Derartige, sogenannte "past performance data" sind besonders gut geeignet, um hieraus mittels eines angelernten KI-Systems ausreichend genaue absolute Werte für die Bewertung der Wirksamkeit eines Werbespots zu erzeugen.

Gemäß einer bevorzugten Ausführungsform der Erfindung werden bei der Ermittlung der Wirksamkeit des Werbespots demographische Daten berücksichtigt. Demographische Daten können beispielsweise eine bestimmte Zielgruppe beschreiben, die gemäß Alter, Beruf, Geschlecht, und/oder der Region, in der der Werbespot empfangen werden kann, definiert ist. Nach der Übertragung des Werbespots können dann von einer geeigneten Datenbank oder einem Online-Dienst Informationen abgerufen werden, die Auskunft darüber geben, welcher Anteil der Nutzer, die diesen Werbespot empfangen haben, dieser Zielgruppe angehören. Hier könnten beispielsweise Daten verwendet werden, wie sie von der ,AGF Videoforschung GmbH' bereitgestellt werden. In einem weiteren Schritt könnte dann der mindestens eine erste Wert, der ein Nutzerinteresse vor dem Übertragen des Werbespots realisiert und von einer Suchmaschine dadurch ermittelt wurde, dass die Suchanfragen, die bezüglich der mindestens einen Bezugsinformation des Werbespots vor dem Übertragen des Werbespots von der Suchmaschine angefordert worden sind, auf Suchanfragen von denjenigen Nutzern reduziert werden, die den demographischen Daten derjenigen Nutzer entsprechen, die den Werbespot empfangen haben. Ebenso könnte der mindestens eine zweite Wert, der ein Nutzerinteresse nach dem Übertragen des Werbespots realisiert und von einer Suchmaschine dadurch ermittelt wurde, dass die Suchanfragen, die bezüglich der mindestens einen Bezugsinformation des Werbespots nach dem Übertragen des Werbespots von der Suchmaschine angefordert worden sind, auf Suchanfragen von denjenigen Nutzern reduziert werden, die den demographischen Daten derjenigen Nutzer entsprechen, die den Werbespot empfangen haben. Dadurch kann die Wirksamkeit des Werbespots hinsichtlich der Steigerung eines Nutzerinteresses nochmals präziser ermittelt und bewertet werden.

Werbespots umfassen regelmäßig Videodaten, die eine visuell darstellbare Information bereitstellen und/oder Audiodaten, die eine akustisch wahrnehmbare Information, wie beispielsweise Sprache und Musik, bereitstellen. Gemäß einer Weiterbildung des erfindungsgemäßen Verfahrens wird aus den Videodaten mindestens eine textbasierte Inhaltsinformation bezüglich mindestens eines Inhalts der Videodaten erzeugt und/oder es wird aus den Audiodaten mindestens eine Inhaltsinformation bezüglich mindestens eines Inhalts der Audiodaten erzeugt.

Inhaltsinformationen, die aus einer Videodaten gewonnen werden, können eine automatisch generierte Beschreibung der in dem Video dargestellten Szenen sein. Das automatische Generieren von Szenenbeschreibungen aus Videodaten wird als "action recognition" bezeichnet. Hierfür stehen KI-gesteuerte Softwareprodukte zur Verfügung. Darüber hinaus können KI-gesteuerte Online-Dienste zum Erstellen und/oder Anlernen von spezialisierten action recognition Systemen genutzt werden, wie beispielsweise "Vertex AI", "Video Intelligence API" oder "AWS bzw. Amazon Rekognition".

Inhaltsinformationen, die aus Audiodaten gewonnen werden, können beispielsweise eine mittels automatischer Transkription erzeugte textuelle Repräsentation der Audiodaten sein. Für das maschinelle Erzeugen einer Transkription können hierauf spezialisierte Online-Dienste und/oder auf dem Markt befindliche Software-Pakete genutzt werden.

Gemäß dieser Ausführungsform werden aus den erzeugten Inhaltsinformationen automatisch Schlüsselworte extrahiert. Derartige Schlüsselworte werden auch als "spot content information" bezeichnet. Dies können beispielsweise Verben und Substantive sein, wobei diese nach ihrer besonderen Bedeutung hinsichtlich des Produkts oder allgemeinen Trends gefiltert werden können. Auch eine oder mehrere Orte, die in dem Werbespot genannt sind oder an denen eine Szene spielt, können ein Schlüsselwort sein, ebenso wie technische Gegenstände, die Farbe eines besonders relevanten Gegenstandes, die Art des Auftretens eines Akteurs (stolz, aggressiv, zurückhaltend...), oder ein grundlegender Stil, der den Werbespot begleitet (glamour, relaxed, ...). Hier sind eine Vielzahl unterschiedlicher Kategorien und einzelner Worte vorstellbar, die vorzugsweise mit einem hierfür angelernten, Kl-gesteuerten System aus den Inhaltsinformationen erzeugt werden.

Die so erzeugten Schlüsselwörter (spot content information) werden, nachdem die Wirksamkeit des Werbespots ermittelt bzw. bewertet wurde, in dieser Ausführungsform ihrerseits in Abhängigkeit von der ermittelten Wirksamkeit des gesamten Werbespots bewertet. Vorzugsweise wird hier zusätzlich weiteres Wissen angewendet, das beispielsweise aus der Bewertung der Wirksamkeit von anderen Werbespots gesammelt worden ist. Dieses Wissen kann entweder einer hierfür vorgesehenen Datenbank entnommen werden oder es wird ein KI-gesteuertes System eingesetzt, das mithilfe der Inhaltsinformationen und insbesondere der hieraus erzeugten Schlüsselwörter von anderen Werbespots und den zugehörigen Bewertungen der jeweiligen Wirksamkeit angelernt worden sind. So könnte sich beispielsweise ergeben, dass Werbespots, die in einer privaten Küche spielen, durchschnittlich eine höhere Wirksamkeit erzielen als Werbespots, die in einem Wohnzimmer spielen. Oder es könnte sich ergeben, dass Werbespots, in denen Akteure in einem violetten Fahrzeug unterwegs sind, eine geringere Wirksamkeit haben, als Werbespots, in denen rote oder schwarze Fahrzeuge eingesetzt werden.

Die der Erfindung zugrundeliegende Aufgabe wird auch durch ein Client-Server System der eingangs genannten Art dadurch gelöst, dass das Client-Server System zur Durchführung des erfindungsgemäßen Verfahrens eingerichtet ist.

Weitere Merkmale und Vorteile der vorliegenden Erfindung werden nachfolgend unter Bezugnahme auf die Figuren näher erläutert. Es wird betont, dass einzelnen in den Figuren gezeigte Merkmale auch für sich alleine erfindungswesentlich sein können, selbst wenn dies in den Figuren nicht gezeigt und in der Beschreibung nicht ausdrücklich erwähnt ist. Ferner können die einzelnen in den Figuren gezeigten Merkmale in einer beliebigen Weise miteinander kombiniert werden, selbst wenn diese Kombination in den Figuren nicht gezeigt und in der Beschreibung nicht ausdrücklich erwähnt ist. Es zeigen:
- Figur 1: ein erfindungsgemäßes Client-Server System gemäß einem ersten Ausführungsbeispiel;
- Figur 2: ein Ablaufdiagramm eines Verfahrens gemäß einer möglichen Ausführungsform; und
- Figur 3: ein Ablaufdiagramm eines Verfahrens gemäß einer weiteren möglichen Ausführungsform.

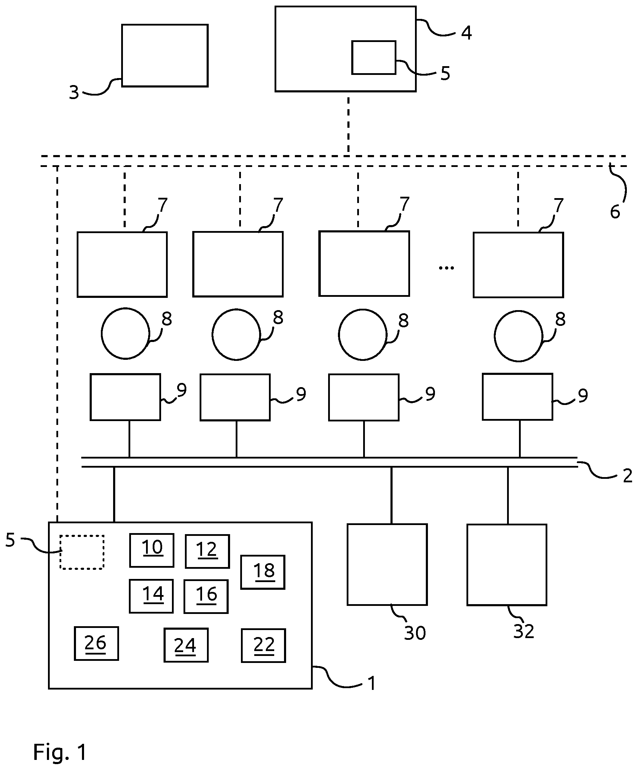

In Figur 1 ist ein Client-Server System 1 dargestellt, das beispielsweise mittels eines Ethernet Kabels oder einer WiFi-Verbindung mit einem ersten Kommunikationsnetzwerk 2, das beispielsweise als das Internet ausgebildet ist, verbunden ist. In Figur 1 sind ferner ein Unternehmen 3 und eine Sendeanstalt 4 schematisch gezeigt, wobei das Unternehmen 3 einen Werbespot 5 für ein Produkt oder eine Dienstleistung bei der Sendeanstalt 4 hinterlegt hat, so dass die Sendeanstalt 4 den Werbespot 5 zu einem festgelegten Zeitpunkt und/oder innerhalb einer vorher bestimmten TV-Sendung und/oder mit einer vorher bestimmten regionalen Ausdehnung über ein zweites Kommunikationsnetzwerk 6, das zur Übertragung von TV-Sendungen geeignet ist, ausstrahlt. Der Werbesport 5 ist bevorzugt ein TV-Werbespot. Zum Aussenden des Werbespots 5 können die bekannten Techniken wie Kabel-, Satelliten- und Funkübertragungen vorgesehen sein. Insbesondere kann das zweite Kommunikationsnetzwerk 6 auch mit dem ersten Kommunikationsnetzwerk 2 verbunden sein, und es ist ferner möglich, dass das erste Kommunikationsnetzwerk 2 und das zweite Kommunikationsnetzwerk 6 als ein zusammenhängendes Netzwerk, insbesondere als Teile des Internets, realisiert sind.

Mit dem zweiten Kommunikationsnetzwerk 6 sind gemäß der in Figur 1 gezeigten Ausführungsform mehrere Clients 7 verbindbar, die zum Empfang von TV-Sendungen und/oder Radiosendungen eingerichtet sind. Die Clients 7 sind Nutzern 8 zugeordnet und können beispielsweise als Set Top-Boxen, als TV-Geräte, als Smart-TVs, als HbbTVs, als PCs, Laptops, Tablets, Smartphones und als sonstige bekannte oder zukünftig zu entwickelnde Endgeräte ausgebildet sein, die geeignet sind, TV-Sendungen über ein oder mehrere Netzwerke 2, 6 zu empfangen.

Den Nutzern 8 sind weitere Endgeräte 9 zugeordnet, die beispielsweise als PC, Laptop, Tablet oder Smartphone ausgebildet sind. Die Endgeräte 9 können jedoch ebenfalls als Set Top-Boxen, als Smart-TVs oder als HbbTVs ausgebildet sein. Die Endgeräte 9 sind mit dem Internet 2 verbindbar, so dass insbesondere eine Suchanfrage an eine Suchmaschine 30 gerichtet werden kann.

In dem Client-Server System 1 ist eine Kopie des Werbespots 5 abgespeichert, die beispielsweise über das Kommunikationsnetzwerk 6 ausgestrahlt bzw. übertragen und von dem Client-Server System 1 empfangen wurde. In dem Client-Server System 1 sind mehrere Funktionsgruppen ausgebildet, die in Software, Hardware oder einer Kombination hiervon realisiert sein können. Eine Funktionseinheit 10 ist für das Extrahieren von textuellen Szenenbeschreibungen aus den Videodaten des Werbespots 5 eingerichtet. Die Funktionseinheit 10 kann auch durch einen Service eines hierauf spezialisierten Anbieters realisiert sein, dessen Dienste über das Internet 2 angefordert werden. Hierfür stehen KI-gesteuerte Softwareprodukte zur Verfügung. Darüber hinaus können KI-gesteuerte Online-Dienste zum Erstellen und/oder Anlernen von spezialisierten action recognition Systemen genutzt werden, wie beispielsweise "Vertex AI", "Video Intelligence API" oder "AWS bzw. Amazon Rekognition". Die extrahierten Inhaltsinformationen können dann in einer Datenbank 12 abgespeichert werden.

In einer Funktionseinheit 14 werden die Audiodaten extrahiert und die sich hieraus ergebenden Inhaltsinformationen in Form einer textuellen Transkription werden in einer Datenbank 16 abgespeichert. Für das maschinelle Erzeugen einer Transkription aus den Audiodaten können hierauf spezialisierte Online-Dienste und/oder auf dem Markt befindliche Software-Pakete genutzt werden, u. U. sogar KI-gesteuerte Dienste bzw. Softwareprodukte. Selbstverständlich können die Datenbanken 12 und 16 auch als nur eine einzige Funktionseinheit realisiert werden.

In einer Funktionseinheit 18 wird aus den textuellen Beschreibungen, die aus den Videodaten und den Audiodaten in den Funktionseinheiten 10 und 14 extrahiert wurden, eine signifikante Menge von Begriffen extrahiert, die als ,spot content information' bezeichnet werden. Die Funktionseinheit 18 benutzt hier geeignete Heuristiken und/oder ein oder mehrere KI-Systeme, die durch Daten, die aus anderen Werbespots extrahiert worden sind und denen eine ausreichend hohe Relevanz zugeordnet wurde, trainiert wurden.

In dem Client-Server System 1 ist eine Funktionseinheit 22 vorgesehen, die eine Datenbank umfasst, in welcher unter anderem absolute Konversionsraten von früheren Werbespots abgespeichert sind. In der Funktionseinheit 22 können ferner demographische Daten abgespeichert werden, die Informationen zu früheren Werbespots und insbesondere Informationen zu dem Werbespot 5 umfassen. Diese demographischen Informationen können beispielsweise über das Internet 2 von einem hierfür eingerichteten Service 32 abgerufen werden. Ein solcher Service 32 wird beispielsweise von der ,AGF Videoforschung GmbH' bereitgestellt.

In einer Funktionseinheit 24 kann in Abhängigkeit von den in der Funktionseinheit 18 erzeugten Inhaltsinformationen sowie ausgewählten, von der Funktionseinheit 22 bereitgestellten Informationen die Wirksamkeit des Werbespots 5 ermittelt werden. Hierzu werden insbesondere die Veränderungen von Nutzerinteressen vor dem Übertragen des Werbespots 5 und nach dem Übertragen des Werbespots 5 herangezogen. Das Client-Server System 1 kann hierfür geeignete Informationen von der Suchmaschine 30 abrufen. Diese Informationen können als absolute, insbesondere aber auch als relative Werte abrufbar sein. Um aus den relativen Werten absolute Werte mit hinreichender Genauigkeit zu bilden, kann in der Funktionseinheit 24 ein KI-System ausgebildet sein, das aus Informationen zu früheren Werbespots, beispielsweise bezüglich dort erzielter Konversionsraten oder absoluter Gewinnerhöhungen aus den für den aktuellen Werbespot 5 vorliegenden relativen Werten sowie gegebenenfalls unter Berücksichtigung von demographischen Daten eine aussagekräftige absolute Bewertung der Wirksamkeit erzeugt.

Insbesondere wird in der Funktionseinheit 24 mindestens ein Werbespot ermittelt, der eine besonders hohe Wirksamkeit hat, d.h. bei den Nutzern 8 besonders gut angekommen ist. Die diesem besonders wirksamen mindestens einen Werbespot zugeordneten textuellen Szenenbeschreibungen der Videodaten sowie die entsprechende textuelle Transkription der Audiodaten sind in den Datenbanken 12 und 16 abgespeichert und stehen dort zum Abruf zur Verfügung.

Schließlich kann in einer Funktionseinheit 26 ein KI-System vorgesehen sein, das ausgebildet und trainiert ist, um aus mehreren Schlüsselworten einen synthetischen TV-Werbespot zu generieren. Als Schlüsselworte werden bevorzugt aus den Videodaten generierte textuelle Szenenbeschreibungen aus der Datenbank 12 und/ oder aus den Audiodaten generierte textuelle Transkriptionen der Audiodaten aus der Datenbank 16 herangezogen. Besonders bevorzugt werden die Schlüsselworte für den mindestens einen in der Funktionseinheit 24 ermittelten besonders wirksamen Werbespot herangezogen. Dadurch kann in der Funktionseinheit 26 mittels KI vollautomatisch innerhalb kürzester Zeit ein besonders wirksamer synthetischer Werbesport generiert werden, der bei den Nutzern 8, ggf. unter Berücksichtigung bestimmter demographischer Daten (bspw. bei Nutzern 8 einer bestimmten Zielgruppe), besonders gut ankommt.

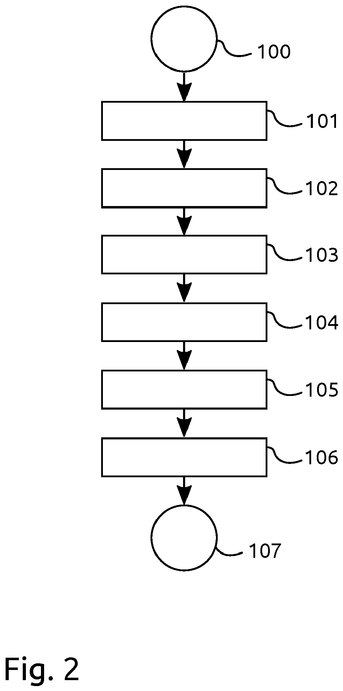

In Figur 2 ist ein Ablaufdiagramm dargestellt, das einzelne Schritte eines möglichen Ausführungsbeispiels des erfindungsgemäßen Verfahrens (sog. "processing pipeline") zeigt. Das Verfahren beginnt in einem Schritt 100. In einem Schritt 101 wird ein Werbespot 5 über ein Kommunikationsnetzwerk 6 von einem Client 7 eines Nutzers 8 empfangen. In einem Schritt 102 wird ein zeitlicher Verlauf des Nutzerinteresses von einem Serviceanbieter, beispielsweise einer Internet Suchmaschine 30 angefordert. Hierbei wird als Suchbegriff die mindestens eine Bezugsinformation verwendet, die dem empfangenen Werbespot 5 zugeordnet ist. Die Bezugsinformation kann beispielsweise die Bezeichnung eines Produktes, einer Produktlinie, einer Dienstleistung, einer Produktkategorie, eine Marke und/oder die Firma eines Unternehmens sein. Ein zeitlicher Verlauf kann beispielsweise von dem Service Google Trends' angefordert werden, der auf Daten der derzeit am häufigsten benutzten Suchmaschine "Google" zugreift.

Der zeitliche Verlauf des Nutzerinteresses umfasst insbesondere das Nutzerinteresse vor und nach dem Empfang des Werbespots 5 durch den Client 7 des Nutzers 8. Das Nutzerinteresse wird insbesondere durch eine absolute oder relative Anzahl an Suchanfragen, die mit der ersten Bezugsinformationen in Verbindung stehen, von dem Endgerät 9 des Nutzers 8 über das erste Kommunikationsnetzwerk 2 repräsentiert. Es wird davon ausgegangen, dass der Nutzer 8 ein Endgerät 9 (z.B. Smartphone oder Laptop Computer) aktiviert, wenn er den Werbespot 5 interessant findet, um mittels einer Suchmaschine im Internet 2 nach der ersten Bezugsinformation als Suchbegriff zu suchen.

In einem Schritt 103 wird aus dem in dem Schritt 102 angeforderten und erhaltenen Verlauf des Nutzerinteresses mindestens ein erster Wert für das Nutzerinteresse vor dem Übermitteln des Werbespots 5 ermittelt und in einem Schritt 104 wird mindestens ein zweiter Wert für das Nutzerinteresse nach dem Übermitteln des Werbespots 5 aus dem Verlauf des Nutzerinteresses ermittelt. In einem Schritt 105 wird aus dem mindestens einen ersten Wert, der das Nutzerinteresse vor dem Übermitteln des Werbespots 5 repräsentiert, und dem mindestens einen zweiten Wert, der das Nutzerinteresse nach dem Übermitteln des Werbespots 5 repräsentiert, eine Größe gebildet, welche eine Signifikanz für die Wirkung des ausgestrahlten bzw. übermittelten Werbespots 5 haben kann. Handelt es sich bei den Werten lediglich um einen Wert, der das Nutzerinteresse vor dem Übermitteln des Werbespots an die Nutzer 8 repräsentiert, sowie einem zweiten Wert, der das Nutzerinteresse nach dem Übermitteln des Werbespots repräsentiert, so kann die Differenz dieser Werte gebildet werden. Werden mehrere Werte, die zu unterschiedlichen Zeitpunkten vor dem Ausstrahlen des Werbespots 5 ermittelt wurden und mehrere Werte, die zu verschiedenen Zeitpunkten nach dem Ausstrahlen des Werbespots 5 das aktuelle Nutzerinteresse repräsentieren, herangezogen, so kann mit bekannten Mitteln aus der Statistik aus diesen Werten eine Größe gebildet werden, die eine Veränderung des Nutzerinteresses, das durch das Ausstrahlen des Werbespots 5 veranlasst ist, repräsentiert.

In einem Schritt 106 wird hieraus auf die Wirksamkeit des Werbespots 5 geschlossen bzw. die Wirksamkeit des Werbespots 5 bewertet. Ist die Veränderung des Nutzerinteresses lediglich durch relative Werte verfügbar, so können hieraus absolute Werte mit hinreichender Genauigkeit dadurch gebildet werden, dass in dem Schritt 106 zusätzlich aus Informationen zu früheren Werbespots, beispielsweise bezüglich dort erzielter Konversionsraten oder absoluter Gewinnerhöhungen, durch Vergleich sowie gegebenenfalls unter Berücksichtigung von demographischen Daten aus den für den aktuellen Werbespot 5 vorliegenden relativen Werten eine aussagekräftige absolute Bewertung der Wirksamkeit des Werbespots 5 gebildet wird.

Das Verfahren ("processing pipeline") mit den Schritten 101 bis 106 kann mehrfach jeweils für verschiedene Werbespots 5 durchlaufen werden, um mindestens einen Werbespot 5 zu ermitteln, der eine besonders hohe Wirksamkeit hat. Die diesem besonders wirksamen mindestens einen Werbespot 5 zugeordneten textuellen Szenenbeschreibungen der Videodaten sowie die entsprechende textuelle Transkription der Audiodaten sind in den Datenbanken 12 und 16 abgespeichert und stehen dort zum Abruf zur Verfügung.

Nach der Ermittlung des bzw. der besonders wirksamen Werbespots 5 können in einem weiteren Schritt einem KI-System, das ausgebildet und trainiert ist, um aus mehreren Schlüsselworten einen synthetischen TV-Werbespot zu generieren. die textuellen Szenenbeschreibungen der Videodaten sowie die entsprechende textuelle Transkription der Audiodaten für den oder die besonders wirksamen Werbespots 5 als Schlüsselworte zugeführt werden. Dadurch kann mittels KI vollautomatisch innerhalb kürzester Zeit ein synthetischer Werbesport generiert werden, der bei den Nutzern besonders gut ankommt.

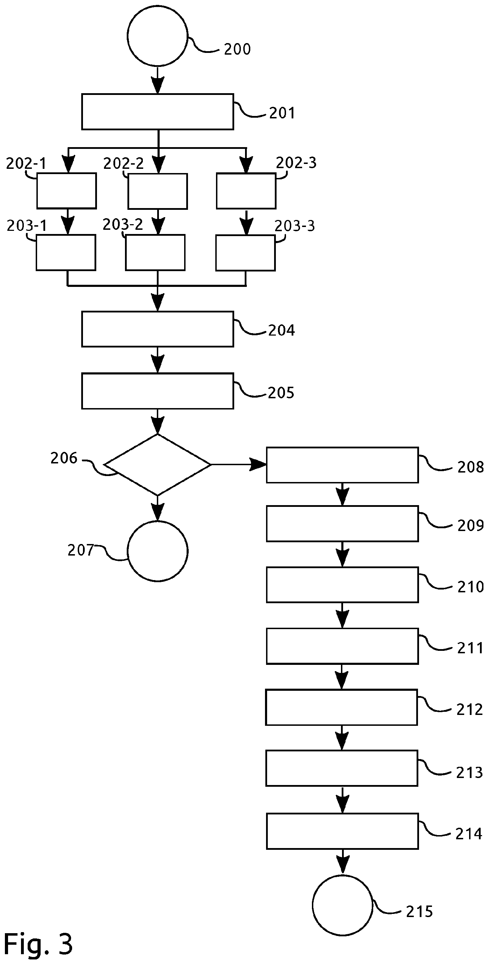

In Figur 3 ist ein weiteres mögliches Ausführungsbeispiel des erfindungsgemäßen Verfahrens gezeigt. Dieses Verfahren beginnt in einem Schritt 200. In einem Schritt 201 wird der Werbespot 5 über das Kommunikationsnetzwerk 6 an die Clients 7 einer bestimmten Zielgruppe von Nutzern 8 übertragen. Für den Werbespot 5 kann beispielsweise vorgegeben sein, innerhalb welcher TV-Sendung er den Nutzern 8 angezeigt wird. Es kann ferner vorgegeben sein, an welcher Stelle innerhalb einer Werbeunterbrechung der Werbespot 5 gezeigt wird.

Bei dem in Figur 3 dargestellten Ausführungsbeispiel wird davon ausgegangen, dass drei Bezugsinformationen für den Werbespot 5 bereitstehen. Dies können beispielsweise die Firma des Unternehmens 3, der Name eines mittels des Werbespots 5 beworbenen Produktes und eine Marke sein, die dem Produkt zugeordnet ist. Die Bezugsinformationen werden vorzugsweise von dem Unternehmen 3 zur Verfügung gestellt.

In einem Schritt 202-1 wird in Abhängigkeit von einer ersten Bezugsinformation, eine Anforderung an die Suchmaschine 30 oder einen Serviceanbieter, der mit der Suchmaschine 30 in Verbindung steht, gesendet, um Informationen über die Häufigkeit von an die Suchmaschine 30 gerichteten Suchanfragen, die mit der ersten Bezugsinformationen in Verbindung stehen, zu erhalten. Dies kann beispielsweise ein minutengenauer zeitlicher Verlauf der Suchanfragen an die Suchmaschine sein, die die erste Bezugsinformation betreffen. Werden diese Ergebnisse beispielsweise von dem als ,Google Trends' bezeichneten Service zur Verfügung gestellt, kann es sich um relative Werte handeln, die derart gestaltet sind, dass der innerhalb des abgefragten Zeitraums höchste Wert den Wert 100 erhält und die anderen Werte dann im Verhältnis zu diesem Höchstwert angegeben werden.

In einem Schritt 203-1 werden die Informationen, die die Häufigkeit der Suchanfragen in Abhängigkeit von der ersten Bezugsinformation beschreiben, weiterverarbeitet, um eine Aussage über die Wirksamkeit des Werbespots 5 zu erhalten. Hierzu können demographische Daten herangezogen werden, mit deren Hilfe ermittelt wird, wie viele der Suchanfragen mit hoher Wahrscheinlichkeit von den mit dem Werbespot 5 erreichten Nutzern 8 stammen. Ferner können zumindest hinreichend genaue Aussagen darüber erzeugt werden, wie viele der mit dem Werbespot 5 erreichten Nutzer 8 einer mit dem Werbespot 5 erreichten Zielgruppe angehören. Hierzu können statistische Methoden oder eigens hierfür angelernte KI-Systeme angewendet werden.

Die Schritte 202-2 und 203-2 werden analog zu den Schritten 202-1 und 203-1 ausgeführt, wobei hier jedoch die zu ermittelnde Wirksamkeit des Werbespots 5 hinsichtlich einer Veränderung derjenigen Suchanfragen bestimmt wird, die die zweite Bezugsinformation betreffen. Analog hierzu werden die Schritte 202-3 und 203-3 für die Werte durchgeführt, die die dritte Bezugsinformation betreffen.

In einem Schritt 204 werden die in den Schritten 203-1, 203-2 und 203-3 ermittelten Werte zusammengeführt, um eine Gesamtaussage über die Wirksamkeit des Werbespots 5 zu erhalten. Hier kann beispielsweise ein Mittelwert gebildet werden, wobei die Einzelwerte zusätzlich nach deren wahrscheinlichen Aussagekraft für die Beurteilung der Effektivität des Werbespots 5 gewichtet sein können.

In dem in Figur 3 gezeigten Ausführungsbeispiel wird davon ausgegangen, dass die von dem Serviceanbieter erhaltenen Informationen bezüglich der Häufigkeit von Suchanfragen, die die Bezugsinformationen betreffen, relative Daten enthalten. In einem Schritt 205 werden aus den relativen Daten absolute Werte ermittelt, so dass die Wirkung des Werbespots absolut bewertbar ist. Hierzu können insbesondere Informationen von Werbespots, die zu einem früheren Zeitpunkt gesendet worden sind und deren Wirksamkeit bereits bekannt ist, herangezogen werden. Derartige Informationen sind beispielsweise in der Funktionseinheit 22 in Figur 2 abgespeichert.

Beispielsweise betreffen diese Werbespots Produkte und/oder Unternehmen, die hinreichend ähnlich sind zu denen des Werbespots 5. Vorzugsweise wird auch hierfür ein KI-System eingesetzt, das mit den Informationen aus einer Datenbank, in welcher die relevanten Daten zu früheren Werbeaktionen abgespeichert sind, trainiert wurde.

In einem Schritt 206 wird entschieden, ob das Verfahren hier beendet werden soll oder ob Vorschläge für eine Optimierung des Werbespots 5 erzeugt werden sollen.

Falls keine Optimierungsvorschläge vorgesehen sind, endet das Verfahren in einem Schritt 207.

Andernfalls werden in einem Schritt 208 Inhaltsinformationen in Form von textuellen Szenenbeschreibungen aus den Videodaten des Werbespots 5 erzeugt. Hierfür können speziell für diese Aufgabe trainierte KI-Systeme eingesetzt werden oder es wird über das Internet 2 ein entsprechender Service eines externen Anbieters in Anspruch genommen. In einem Schritt 209 werden die extrahierten Inhaltsinformationen in einer Datenbank 12 abgespeichert.

In einem Schritt 210 werden Inhaltsinformationen aus den Audiodaten extrahiert und in einem Schritt 211 wird die sich hieraus ergebende textuelle Transkription in einer Datenbank 16 abgespeichert.

In einem Schritt 212 wird aus den textuellen Beschreibungen, die aus den Videodaten und den Audiodaten in den Funktionseinheiten 10 und 14 extrahiert wurden, eine signifikante Menge von Schlüsselworten (,spot content information') extrahiert. Hierzu werden geeignete Heuristiken und/oder ein oder mehrere KI-Systeme eingesetzt, die unter Verwendung von Daten, die aus anderen Werbespots extrahiert worden sind und denen eine ausreichend hohe Relevanz zugeordnet worden ist, trainiert wurden.

In einem Schritt 213 werden die extrahierten Schlüsselwörter mit Schlüsselwörtern verglichen, die aus anderen Werbespots extrahiert wurden, wobei vorzugsweise Werbespots berücksichtigt werden, die eine höhere Wirksamkeit erzielt haben als der aktuell zu bewertende Werbespot 5. Mögliche Ergebnisse werden dann in einem Schritt 214 dargestellt bzw. ausgegeben. Spielt eine der relevanten Szenen in dem Werbespot 5 beispielsweise in einer Garage, wohingegen Szenen aus vergleichbaren Werbespots in der Einfahrt einer Villa spielen, so wird dies erkannt und in dem Schritt 214 wird vorgeschlagen, die Szene in der Garage durch eine Szene zu ersetzen, die in der Einfahrt einer Villa spielt. Das Verfahren endet in einem Schritt 215.

Selbstverständlich können die vorgeschlagenen Optimierungen nicht nur einen Ort betreffen, sondern viele andere Bereiche, wie zum Beispiel eine Tageszeit, das Geschlecht wichtiger Akteure, die Farbe von benutzen Fahrzeugen, die Inneneinrichtung von Räumen, die Ausdrucksweise der Akteure, Stil und/oder Farbe der Kleidung, etc.

Für das Kategorisieren der relevanten Begriffe, das Bestimmen von ähnlichen Werbespots und das Vorschlagen von möglicherweise optimierbaren Eigenschaften des Werbespots 5 kann wieder ein KI-System, das speziell hierfür mittels der historischen Daten von diesbezüglich zu einem früheren Zeitpunkt analysierten Werbespots trainiert worden ist, vorteilhaft eingesetzt werden. Somit ist es mit dem erfindungsgemäßen Verfahren und dem erfindungsgemäßen Client-Server System 1 nicht nur möglich, die Wirksamkeit des Werbespots 5 zu bewerten, sondern auch Vorschläge für eine Optimierung der Wirksamkeit vorzuschlagen.

## Patentansprüche

1. Verfahren zur Bewertung der Wirksamkeit eines über ein Kommunikationsnetzwerk (6) übertragbaren Werbespots (5), wobei dem Werbespot (5) mindestens eine Bezugsinformation zugeordnet ist,
**dadurch gekennzeichnet, dass** das Verfahren die folgenden Schritte umfasst:
- Ermitteln (103) mindestens eines ersten Wertes, der ein Nutzerinteresse vor dem Übertragen des Werbespots (5) realisiert, wobei der erste Wert in Relation zu einer relativen oder absoluten Häufigkeit steht, mit der Suchanfragen bezüglich der mindestens einen Bezugsinformation an eine Suchmaschine (30) vor dem Übertragen des Werbespots (5) angefordert wurden;
- Ermitteln (104) mindestens eines zweiten Wertes, der ein Nutzerinteresse nach dem Übertragen des Werbespots (5) realisiert, wobei der zweite Wert in Relation zu einer relativen oder absoluten Häufigkeit steht, mit der Suchanfragen bezüglich der mindestens einen Bezugsinformation an eine Suchmaschine (30) nach dem Übertragen des Werbespots (5) angefordert werden;
- Ermitteln (105) einer Veränderung des Nutzerinteresses durch Vergleich des mindestens ersten Wertes und des mindestens zweiten Wertes;
- Bestimmen (105) eines Wertes für die Wirksamkeit des Werbespots (5) in Abhängigkeit von der Veränderung des Nutzerinteresses.

2. Verfahren nach Anspruch 1, **dadurch gekennzeichnet, dass** der mindestens eine erste Wert, der ein Nutzerinteresse vor dem Übertragen des Werbespots (5) realisiert, und der mindestens eine zweite Wert, der ein Nutzerinteresse nach dem Übertragen des Werbespots (5) realisiert,
- von einem mit der Suchmaschine (30) verbundenen Service,
- mittels der Daten eines Internet Service Providers durch Auswerten der von dessen Nutzern eingegebenen Suchanfragen und/oder
- durch Erfassen und Auswerten der mittels der Internetbrowser von Nutzern (8) abgesandten Suchanfragen erzeugt wird.

3. Verfahren nach einem der vorangehenden Ansprüche, wobei dem Werbespot (5) mehrere Bezugsinformationen zugeordnet sind, **dadurch gekennzeichnet, dass** für mindestens zwei Bezugsinformationen eine hiervon abhängige jeweilige Teil-Wirksamkeit des Werbespots (5) ermittelt wird (202-1, 202-2, 202-3), und auf eine Gesamtwirksamkeit dadurch geschlossen wird (203-1, 203-2, 203-3), dass
- die höchste der mindestens zwei Teil-Wirksamkeiten gewählt wird;
- ein Mittelwert aus den Teil-Wirksamkeiten gebildet wird; und/oder
- jede der Teil-Wirksamkeiten hinsichtlich der jeweiligen Relevanz der zugrundeliegenden Bezugsinformationen für den Werbespot (5) gewichtet wird und aus den gewichteten Werten ein Mittelwert bestimmt wird.

4. Verfahren nach einem der vorangehenden Ansprüche, **dadurch gekennzeichnet, dass** ein zeitlicher Verlauf der Suchanfragen bezüglich mindestens einer Bezugsinformation erfasst wird und in Abhängigkeit von einer Veränderung des zeitlichen Verlaufs vor und nach dem Übertragen des Werbespots (5) dessen Wirksamkeit ermittelt wird.

5. Verfahren nach einem der vorangehenden Ansprüche, wobei
- der zeitliche Verlauf des Nutzerinteresses und/oder
- der mindestens erste Wert, der ein Nutzerinteresse vor dem Übertragen des Werbespots (5) darstellt und der mindestens zweite Wert, der ein Nutzerinteresse nach dem Übertragen des Werbespots (5) darstellt, relative Werte sind,
**dadurch gekennzeichnet, dass** eine absolute Wirksamkeit des Werbespots (5) dadurch bestimmt wird (24; 106; 205), dass die relative Wirksamkeit des Werbespots (5) und/oder die ein Nutzerinteresse realisierenden, relativen Werte mit den entsprechenden Werten eines anderen Werbespots verglichen werden, wobei für den anderen Werbespot absolute Werte für die Wirksamkeit und/oder ein Nutzerinteresse realisierenden Werte bekannt sind.

6. Verfahren nach Anspruch 5, **dadurch gekennzeichnet, dass** die absolute Wirksamkeit unter Verwendung von Künstlicher Intelligenz ermittelt wird, wobei insbesondere Techniken aus dem Bereich Maschinelles Lernen' angewendet werden.

7. Verfahren nach einem der vorangehenden Ansprüche, **dadurch gekennzeichnet, dass** bei der Ermittlung der Wirksamkeit des Werbespots (5) demographische Daten berücksichtigt werden (22; 106; 203-1, 203-2, 203-3).

8. Verfahren nach Anspruch 7, **dadurch gekennzeichnet, dass** insbesondere eine regionale Ausstrahlung und/oder eine Zielgruppe bei dem Ermitteln der Wirksamkeit berücksichtigt werden.

9. Verfahren nach einem der vorangehenden Ansprüche, wobei der Werbespot (5) Videodaten und/oder Audiodaten umfasst, **dadurch gekennzeichnet, dass** das Verfahren die folgenden Schritte umfasst:
- automatisches Erzeugen (208) mindestens einer textbasierten Inhaltsinformation bezüglich mindestens eines Inhalts der Videodaten und/oder
- automatisches Erzeugen (210) mindestens einer textbasierten Inhaltsinformation bezüglich mindestens eines Inhalts der Audiodaten,
sowie den folgenden Schritten:
- automatisches Extrahieren (212) von Schlüsselworten aus den Inhaltsinformationen;
- Bewerten (213) der Inhaltsinformationen in Abhängigkeit von der ermittelten Veränderung des Nutzerinteresses und/oder der ermittelten Wirksamkeit des Werbespots (5).

10. Verfahren nach einem der vorhergehenden Ansprüche, **dadurch gekennzeichnet, dass** eine Optimierung der Wirksamkeit des Werbespots (5) vorgeschlagen wird (214), wobei die Optimierung
- das Wählen eines anderen Zeitpunkts für die Übertragung des Werbespots (5) über das Kommunikationsnetzwerk (6) betrifft, und/oder
- das Verändern eines Inhalts oder mehrerer Inhalte betrifft, wobei Inhalte, deren Inhaltsinformationen nicht oder nur wenig zu der Wirksamkeit des Werbespots (5) beitragen, entfernt werden, und/oder Inhalte, deren Inhaltsinformationen bei vergleichbaren Werbespots zu einer höheren Wirksamkeit beitragen, hinzugenommen werden.

11. Verfahren zur Ermittlung eines besonders wirksamen über ein Kommunikationsnetzwerk (6) übertragbaren Werbespots (5), **dadurch gekennzeichnet, dass** das Verfahren nach einem der vorhergehenden Ansprüche mehrfach durchlaufen wird, um mindestens einen Werbespot (5) zu ermitteln, der eine besonders hohe Wirksamkeit hat, und dem mindestens einen Werbespot (5) zugeordnete textbasierte Inhaltsinformationen bezüglich mindestens eines Inhalts der Videodaten und/oder mindestens eines Inhalts der Audiodaten zu ermitteln, wobei die textbasierten Inhaltsinformation bevorzugt in mindestens einer Datenbank (12; 16) abgespeichert werden.

12. Verfahren nach Anspruch 11, **dadurch gekennzeichnet, dass** einem KI-System, das ausgebildet und trainiert ist, um aus mehreren Schlüsselworten einen synthetischen TV-Werbespot zu generieren, die textbasierte Inhaltsinformationen bezüglich mindestens eines Inhalts der Videodaten und/oder mindestens eines Inhalts der Audiodaten als Schlüsselworte zugeführt werden.

13. Verfahren nach Anspruch 12, **dadurch gekennzeichnet, dass** dem KI-System die textbasierten Inhaltsinformationen des mindestens einen Werbespots (5) zugeführt werden, für den eine besondere hohe Wirksamkeit ermittelt wurde.

14. Client-Server System (1), wobei das Client-Server System (1) mit einem Kommunikationsnetzwerk (2, 6) verbindbar ist, **dadurch gekennzeichnet, dass** auf dem Client-Server System (1) ein Verfahren nach einem der vorhergehenden Ansprüche ausführbar ist.
